# EUROPEAN PATENT SPECIFICATION

(11) **EP 4 186 757 B1**
(45) Date of publication and mention of the grant of the patent: **04.06.2025**
(21) Application number: 20946610.1
(22) Date of filing: 28.07.2020
(51) Int. Cl.: B60T 8/58, B60T 8/18, B60T 13/66, B60T 17/22, B61H 13/00

(54) **RAILWAY WAGON BRAKE CONTROL SYSTEM AND CONTROL METHOD**
BREMSSTEUERSYSTEM FÜR EISENBAHNWAGGONS UND STEUERUNGSVERFAHREN
SYSTÈME DE COMMANDE DE FREIN DE WAGON DE CHEMIN DE FER ET PROCÉDÉ DE COMMANDE

(43) Date of publication of application: 31.05.2023
(73) Proprietor: Meishan CRRC Brake Science&Technologyco., Ltd, Meishan, Sichuan 620000 (CN)
(72) Inventor: WU, Jiheng, Meishan, Sichuan 620000 (CN); XIAO, Chen, Meishan, Sichuan 620000 (CN); LIU, Yi, Meishan, Sichuan 620000 (CN); SHEN, Yanfei, Meishan, Sichuan 620000 (CN); YANG, Jianping, Meishan, Sichuan 620000 (CN); JIANG, Yong, Meishan, Sichuan 620000 (CN); LIU, Yamei, Meishan, Sichuan 620000 (CN); OU, Dongfang, Meishan, Sichuan 620000 (CN); ZENG, Qiang, Meishan, Sichuan 620000 (CN)
(74) Representative: Ipside
(86) International application number: PCT/CN2020/105138
(87) International publication number: WO 2022/021055

(56) References cited:
- WO-A1-2004/050443
- WO-A1-2006/122374
- WO-A1-2014/119447
- WO-A1-2016/038137
- CN-A- 102 152 800
- CN-A- 110 949 350
- CN-A- 111 422 217
- CN-A- 111 873 970
- CN-U- 202 017 720

## Description

The present invention belongs to the technical field of train brake control, in particular to a railway wagon brake control system and control method.

### Background of the Invention

The existing UIC standard is applicable to the national railway wagon brake system. At present, the traditional pure air control is still used in most of the brake systems. Vehicle pneumatic brake is one of the brake modes of railway locomotives and vehicles, which is to use compressed air as the braking motive power to control the train braking by changing the pressure of compressed air.

There is not yet a mature and complete self-diagnosis system for the pneumatic brake part of the vehicle. Developing a set of electric-pneumatic brake system of being high in braking synchronism, good in deceleration consistency and capable of achieving real-time self-monitoring can effectively improve the safety and service efficiency of railway wagons.
Patent document WO2014/119447A1 discloses a railroad vehicle brake device.
Patent document WO2006/122374A1 discloses an electronically controlled pneumatic (ECP) brake system which is retrofitted to or a modification of an existing relayed or non-relayed brake setup.
Patent document CN110949350A discloses an electro-pneumatic brake control device and a brake control system.

### Summary of the Invention

To this end, in order to solve the above problems existing in the prior art, the purpose of the present invention is to provide a railway wagon brake control system and a control method to achieve the purposes of being high in braking synchronism, good in deceleration consistency and capable of achieving real-time self-monitoring, consequently to effectively improve the safety and service efficiency of railway wagons.

The technical solution adopted by the present invention is: a railway wagon brake control system, comprising a train pipe and a plurality of disc brakes which are used for braking the wheels of a railway wagon, and also comprising an ECP control host and a distribution valve communicated with the train pipe; the distribution valve is communicated with a plurality of relay valves, each relay valve corresponds to each bogie of the rail wagon, and each disc brake of the same bogie is communicated with the relay valve corresponding to the bogie;
the system also comprises a control air cylinder and an auxiliary reservoir which are communicated with the distribution valve; each bogie is provided with at least one weighing valve, and each weighing valve is respectively communicated with the auxiliary reservoir and the relay valve;
and the system further comprises an ECP pre-control chamber, the ECP pre-control chamber is communicated with the train pipe, and the ECP control host controls the air pressure change in the ECP pre-control chamber so as to enable pressure air in the train pipe to be exhausted.

Furthermore, the system also comprises a speed synchronization control host, wherein the speed synchronization control host is connected to a plurality of speed sensors, and each speed sensor measures the speed of each wheel of the railway wagon.

Furthermore, the speed sensors are installed on the axle ends of each wheel of the railway wagon, and the transmission between the speed sensor and the wheel is realized by means of gear speed measurement.

Furthermore, the disc brake is communicated with the corresponding relay valve through an independent pipeline, and each pipeline is provided with an electromagnetic exhaust valve, which is respectively connected to the speed synchronization control host; the pressure air from the relay valve to each disc brake is further broken down by controlling the exhaust air volume of each electromagnetic exhaust valve.

Furthermore, the train pipe is communicated with a pressure relay, which controls the circuit of each electromagnetic exhaust valve.

Furthermore, the system also comprises an MUD main valve plate, wherein the relay valve and distribution valve are installed on one side of the MUD main valve plate, and the ECP control host, ECP pre-control chamber, control air cylinder, pressure relay and each electromagnetic exhaust valve are installed on the other side, in order to realize integrated design of the whole system.

Furthermore, a block valve is provided between the distribution valve and the train pipe, in order to cut off or connect the distribution valve and the train pipe.

Furthermore, the system also comprises a plurality of pressure sensors connected to the ECP control host, wherein each pressure sensor measures the pressure of the train pipe, the pressure of the control air cylinder, the output pressure of the distribution valve and the output pressure of the relay valve, in order to judge whether the pneumatic brake system of the vehicle is out of order.

Furthermore, the ECP control host is transmitted to an external device through an RS485 communication line, and the speed synchronization control host is installed in the main control cabinet of the railway wagon, in order to transmit and feed back fault information in time.

The present invention also provides a railway wagon brake control method, which is applied in the railway wagon brake control system, and the method comprises:
the ECP control host controls the air pressure change in the ECP pre-control chamber so as to enable pressure air in the train pipe to be exhausted;
after the pressure in the train pipe is reduced, the air in the auxiliary reservoir is controlled to flow to each relay valve through the distribution valve;
each relay valve breaks down its output pressure to each disc brake according to the output of each weighing valve; and
each disc brake performs braking action.

Furthermore, the method also comprises:
speed sensors are configured on the axle ends of each wheel of the railway wagon, and the speed of each wheel is measured by the speed sensor and fed back to the speed synchronization control host;
an electromagnetic exhaust valve is provided on the connecting pipeline between the relay valve and each disc brake; and
the speed synchronization control host controls the corresponding electromagnetic exhaust valve according to the speed data of each wheel, so as to control the output pressure to each disc brake.

Furthermore, the ECP control host continuously measures the pressure of the train pipe, the pressure of the control air cylinder, the output pressure of the distribution valve and the output pressure of the relay valve through the pressure sensor, and judges whether the vehicle is out of order according to the correspondence of each output pressure.

The beneficial effects of the present invention are as follows:
1.The railway wagon brake control system and the control method provided by the present invention are adopted, and the ECP control host cooperates with the distribution valve of the vehicle to implement braking action. When the train is implementing the brake operation, the wireless ECP host synchronously implements the air exhaust action in the train pipe through the wireless network. After the distribution valve senses the pressure drop in the train pipe, the brake control is further completed through the pressure air in the auxiliary reservoir, and during the brake control process, the relay valve will further break down the pressure air to each disc brake according to the weight of the vehicle body. At the same time, the speed synchronization control host will also control the electromagnetic exhaust valve according to the speed of each wheel to control the output pressure to each disc brake, so as to achieve the purposes of being high in braking synchronism, good in deceleration consistency, and being capable of effectively improving the safety and service efficiency of railway wagons.

### Brief Description of the Drawings

Fig. 1 is an overall system framework diagram of the railway wagon brake control system provided by the present invention;
Fig. 2 is a structural diagram of one side of the railway wagon brake control system provided by the present invention; and
Fig. 3 is a structural diagram of the other side of the railway wagon brake control system provided by the present invention.

The reference numerals are as follows:
1-MUD main valve plate, 2-speed synchronization control host, 3-output pressure measuring point of relay valve, 4-electromagnetic exhaust valve, 5-block valve, 6-distribution valve, 7-ECP control host, 8-vehicle monitor, 9-pressure relay, 10-relay valve, 11-speed sensor, 12-disc brake, 13-weighing valve, 14-ECP pre-control chamber, 15-control air cylinder, 16-auxiliary reservoir, 17-train pipe.

### Detailed Description of Embodiments

The embodiments of the application are described below and examples of the embodiments are shown in the drawings, in which the same or similar reference symbols always indicate same or similar modules, or modules with same or similar functions. The exemplary embodiment described by the following figures is to explain the invention, but not a limit of the invention, which is limited only by the scope of the appended claims.

### Embodiment 1

### Explanation of nouns:

ECP pre-control chamber: the air in the ECP pre-control chamber is the pilot air source of the ECP control host and the control air source of the ECP control host. The ECP control host controls the exhaust of the train pipe by controlling the air pressure in the air cylinder. Its working principle has been recorded in detail in the publication number: CN201911305491.X, entitled Vehicle electric-pneumatic brake control device, which will not be repeated here.

Control air cylinder: the air in the control air cylinder is the control air source of the distribution valve.

Distribution valve: its role is to control the air inflation and exhaust of the acting air cylinder according to the pressure change in the train pipe, and realize the braking, pressure maintaining or release of the locomotive through the reversing valve and the application valve.

Train pipe: the air pipe used for braking of cross-country trains is a brake pipe, also called train pipe.

Its role is to achieve the purposes of being high in braking synchronism, good in deceleration consistency, and being capable of effectively improving the safety and service efficiency of railway wagons.

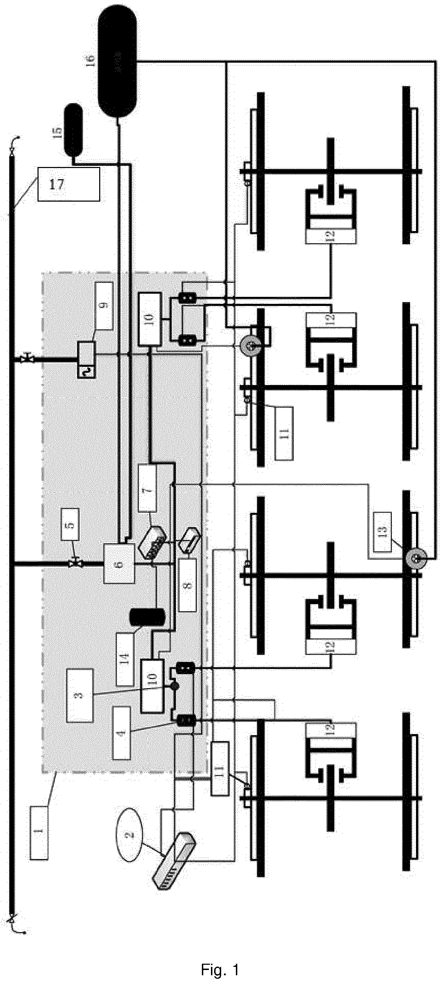

As shown in Fig. 1, the present invention provides a railway wagon brake control system, comprising a train pipe 17 and a plurality of disc brakes 12 which are used for braking the wheels of a railway wagon, and the braking action is performed on each wheel through the action of the disc brake 12, belonging to a conventional technical means on trains, which will not be repeated here.

The system also comprises an ECP control host 7 and a distribution valve 6 communicated with the train pipe 17; a block valve 5 is provided between the distribution valve 6 and the train pipe 17, in order to cut off or connect the distribution valve 6 and the train pipe 17; the distribution valve 6 is communicated with a plurality of relay valves 10, each relay valve 10 corresponds to each bogie of the railway wagon, and each disc brake 12 of the same bogie is communicated with the relay valve 10 corresponding to the bogie. In the present embodiment, take two groups of wheels arranged on the same bogie as an example: the same bogie is provided with a relay valve 10, and the output end of the relay valve 10 is connected to two disc brakes 12 through a separate pipeline to break down the air pressure at the output end of the relay valve 10; each disc brake 12 brakes each group of wheels of the bogie, thereby controlling the action consistency and stability of the disc brakes 12. In practical applications, the use of relay valve 10 can ensure good decomposition of pressure air.

The system also comprises a control air cylinder 15 and an auxiliary reservoir 16 which are communicated with the distribution valve 6; each bogie is provided with at least one weighing valve 13, and each weighing valve 13 is respectively communicated with the auxiliary reservoir 16 and the relay valve 10; the auxiliary reservoir 16 provides air source for the operation of each weighing valve 13, and the output of the relay valve 10 is adjusted adaptively according to the output data of the weighing valve 13. The weighing valve 13 is used for sensing the weight, and the relay valve 10 adjusts its output according to the output data of the weighing valve 13 to control the output pressure.

The system further comprises an ECP pre-control chamber 14. The ECP pre-control chamber 14 is communicated with the train pipe 17, and the ECP control host 7 controls the air pressure change in the ECP pre-control chamber 14 so as to enable pressure air in the train pipe 7 to be exhausted. The ECP pre-control chamber 14, the train pipe 17 and the ECP control host 7 are communicated through a pipeline. In the present embodiment, the ECP control host 7 comprises the on-off solenoid valve disclosed in the prior art (CN201911305491.X). This patented technology has disclosed that "the air pressure change in the pre-control chamber acts on the pressure control of the train pipe through the relay valve ("relay valve" in CN201911305491.X, which is different from the "relay valve" in the present embodiment). Since the space under the diaphragm plate of the relay valve is communicated with the train pipe, the space under the diaphragm plate of the relay valve is the same as the pressure of the train pipe. When the pressure gas in the pre-control chamber is exhausted, the space pressure on the upper side of the diaphragm plate of the relay valve is less than the space pressure on the lower side of the diaphragm plate, and the diaphragm plate moves upward and drives the exhaust valve port to open, so that the pressure gas in the train pipe is exhausted to realize the subsequent braking function". The system also comprises an ECP controller, which can form a network in the local area network and receive remote control.. Each ECP controller in the local area network can realize synchronous control of the electrical control signal of the on-off solenoid valve. In the present embodiment, the working principle of the ECP control host 7 controlling the air pressure change in the ECP pre-control chamber 14 so as to enable pressure air in the train pipe to be exhausted will not be further described. When the pressure air in the train pipe 17 is exhausted, the air pressure in the train pipe 17 will drop, and then it will be induced by the distribution valve 6 to perform subsequent braking action.

To further promote the braking consistency and deceleration control of each wheel, the system also comprises a speed synchronization control host 2, and the speed synchronization control host 2 is installed in the main control cabinet of the railway wagon. The speed synchronization control host 2 is connected to a plurality of speed sensors 11, and each speed sensor 11 measures the speed of each wheel of the railway wagon. In practical application, each speed sensor 11 is installed on the axle end of each wheel of the railway wagon, and each speed sensor 11 measures the speed of each wheel by means of gear speed measurement. When the railway wagon is running, each speed sensor 11 can transmit the speed data of each wheel to the speed synchronization control host 2 which analyzes and processes the speed data, and then output the corresponding control command.

Each disc brake 12 is communicated with the corresponding relay valve 10 through an independent pipeline to ensure that the air output by the relay valve 10 can be further broken down, in order to meet the air pressure requirements of different disc brakes 12, and each pipeline is provided with an electromagnetic exhaust valve 4. In the present embodiment, there are four electromagnetic exhaust valves 4 in total, and every two electromagnetic exhaust valves 4 correspond to one relay valve 10. Each electromagnetic exhaust valve 4 is respectively connected to the speed synchronization control host 2, and the speed synchronization control host 2 transmits the control command to each electromagnetic exhaust valve 4, in order to further control the air pressure of each disc brake 12. In practical application, the speed synchronization control host 2 controls the speeds of the four groups of wheels of the vehicle by controlling the air pressure of each disc brake 12 during speed regulation, so as to achieve the speed synchronization of the wheels. Preferably, the train pipe 17 is communicated with the pressure relay. The circuit of the speed synchronization control host 2 is controlled by the pressure relay 9. The pressure relay 9 is connected in series to the power circuit of the speed synchronization control host 2. The pressure relay 9 makes corresponding actions according to the pressure changes in the train pipe 17. For example, when the pressure of the train pipe 17 is higher than the set value, the pressure relay 9 will act, in order to turn on the power circuit of the speed synchronization control host 2; the speed synchronization control host 2 is in the working state, and the speed synchronization control host 2 receives the speed data fed back by each speed sensor 11 to control the air volume of each electromagnetic exhaust valve 4.

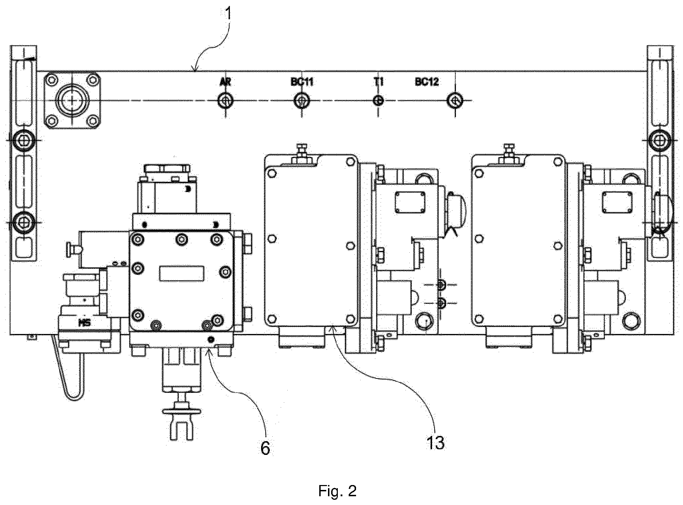

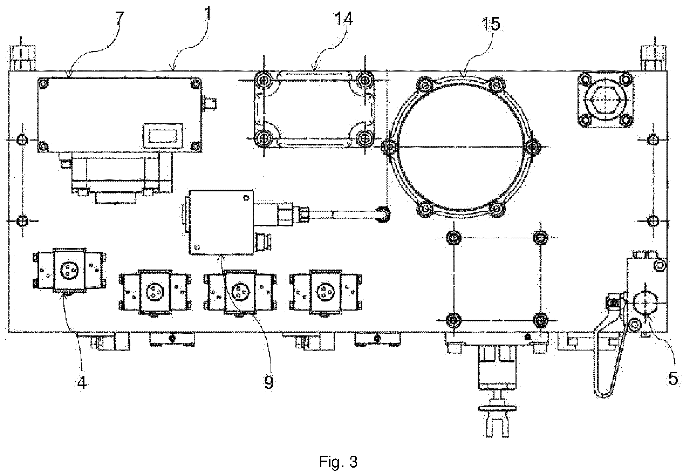

In order to realize the arrangement of the air path of each component and the integration and summary of each component, as shown in Fig. 2 and Fig. 3, the system also comprises an MUD main valve plate 1, and the MUD main valve plate 1 is 910*360*40mm aluminum alloy brazing sheet; the weighing valve 13 and distribution valve 6 are installed on one side of the MUD main valve plate 1, and the ECP control host 7, ECP pre-control chamber 14, control air cylinder 15, block valve 5, pressure relay 9 and each electromagnetic exhaust valve 4 are installed on the other side, in order to finally realize integrated plate type structural design of the whole system. The train pipe 17, the control air cylinder 15, the output port of the distribution valve 6, the output port of the relay valve 10 and the ECP pre-control air cylinder are connected respectively through the pipeline interface on the MUD main valve plate 1. The specific pipeline layout can be adaptively designed according to the actual situation, and its pipeline connection relationship is as shown in the system framework diagram in Fig. 1.

The system also comprises a plurality of pressure sensors connected to the ECP control host 7, wherein each pressure sensor measures the pressure of the train pipe 17, the pressure of the control air cylinder 15, the output pressure of the distribution valve 6 and the output pressure of the relay valve 10 (i.e., output pressure measuring point of the relay valve in Fig. 1). During the operation of railway wagons, the ECP control host 7 continuously measures the pressure of the train pipe 17, the pressure of control air cylinder 15, the output pressure of the distribution valve 6 and the output pressure of the relay valve 10 through the pressure sensor, and judges whether the vehicle is out of order according to the correspondence of each output pressure. However, the pneumatic brake fault monitored by the ECP control host 7 is transmitted to an external device through an RS485 communication line, so that the staff can repair in time.

The working principle of the railway wagon brake control system in the present embodiment is as follows:
After the block valve 5 is opened and the speed synchronization control host 2 and ECP control host 7 are powered on, the whole brake system can work normally.

The whole railway wagon is provided with a plurality of ECP control hosts 7, and each ECP control host 7 has wireless communication function. All ECP control hosts 7 in the train are in the same local area network, and the control commands generated by the ECP control hosts 7 and the vehicle fault information monitored by the vehicle monitor 10 are wirelessly transmitted in the local area network.

When the train is implementing the brake operation, the ECP control host 7 synchronously implements the air exhaust action in the train pipe 17 through a wireless network, and the distribution valve 6 senses the pressure drop in the train pipe 17, and then further controls the air in the auxiliary reservoir 16 to flow to the disc brake 12 to complete the output air pressure control;

The relay valve 10 further breaks down and controls the output pressure according to the weight of the vehicle body fed back by the weighing valve 13 and outputs it to the disc brake 12 through the pipeline;

The speed sensor 11 at the axle end collects the wheel speed, and the speed synchronization control host 2 controls the electromagnetic exhaust valve 4 according to the wheel speed data to further break down and control the output pressure to the disc brake 12;

The output air pressure is controlled finally through the ECP control host 7 and the distribution valve 6 to sense the pressure change of the train pipe 17, and therefore the purposes of being high in braking synchronism, good in deceleration consistency and capable of achieving real-time self-monitoring are achieved.

### Embodiment 2

The present embodiment provides a railway wagon brake control method, which is applied in the railway wagon brake control system, and the control method comprises:
(1) The block valve 5 is opened and the speed synchronization control host 2 and ECP control host 7 are powered on, to ensure that the whole brake system is in the normal working state;
(2) The ECP control host 7 controls the air pressure change in the ECP pre-control chamber 14 so as to enable pressure air in the train pipe 17 to be exhausted, thus reducing the pressure in the train pipe 17;
(3) After the pressure in the train pipe 17 is reduced, the air in the auxiliary reservoir 16 is controlled by the distribution valve 6 to flow to each relay valve 10. At this time, the air circuit between the train pipe 17 and the distribution valve 6 is disconnected, and the pressure air for the subsequent braking of the distribution valve 6 comes from the auxiliary reservoir 16;
(4) The relay valve 10 breaks down its output pressure to each disc brake 12 according to the output of each weighing valve 13, and the weighing valve 13 senses the weight; the relay valve 10 adjusts its output according to the output data of the weighing valve 13, and then breaks down the output pressure air and flows it to each disc brake 12;
(5) In order to further break down the pressure air output by the relay valve 10 and implement the deceleration control of the four wheel axles of the vehicle (only limited to the four wheels in the present embodiment), the control method is as follows:
   speed sensors 11 are configured on the axle ends of each wheel of the railway wagon, and the speed of each wheel is measured by the speed sensor 11 and fed back to the speed synchronization control host 2;
   an electromagnetic exhaust valve 4 is provided on the connecting pipeline between the relay valve 10 and each disc brake 12;
   the speed synchronization control host 2 controls the corresponding electromagnetic exhaust valve 4 according to the speed data of each wheel, so as to control the output pressure to each disc brake 12, and achieve the deceleration control of the four axles of the vehicle; and
(6) Each disc brake performs braking action.

In the control method of the present embodiment, the ECP control host 7 continuously measures the pressure of the train pipe 17, the pressure of the control air cylinder 15, the output pressure of the distribution valve 6 and the output pressure of the relay valve 10 through the pressure sensor, and judges whether the vehicle is out of order according to the correspondence of each output pressure. The monitored pneumatic brake fault is transmitted to an external device through an RS485 communication line, so that the staff can repair in time.

It should be noted that, in the description of the present application, the terms "first", "second", etc. are only used for description, but cannot be understood to indicate or imply relative importance. In addition, in the description of the present application, "multiple" means at least two, unless otherwise specified, unless otherwise specified.

Any process or method description in the flow diagram or otherwise described herein can be understood to represent a module, segment or part of a code including one or more executable instructions for implementing the steps of a specific logic function or process, and the scope of the preferred implementation method of the present application includes other implementations, which may not be in the order shown or discussed. It should be understood by those skilled in the art of the embodiments of the present application that functions are performed in a substantially simultaneous manner or in a reverse order according to the functions involved.

It should be understood that, all parts of the present application can be realized by hardware, software, firmware or combination thereof. In the above embodiments, multiple steps or methods may be implemented with software or firmware stored in a memory and executed by a suitable instruction execution system. For example, if it is implemented by hardware, as in another embodiment, it can be implemented by any one of the following technologies known in the art or their combination: a discrete logic circuit with a logic gate circuit for realizing a logic function on a data signal, an application-specific integrated circuit with a suitable combined logic gate circuit, a programmable gate array (PGA), field programmable gate array (FPGA), etc.

Those skilled in the art can understand that all or part of the steps carried by the method of implementing the above embodiments can be completed by instructing relevant hardware through a program. The program can be stored in a computer-readable storage medium. When the program is executed, it includes one or a combination of the steps of the method embodiment.

In addition, all functional units in each embodiment of the present application can be integrated in one processing module, or all units can also physically exist independently, or two or over units are integrated in one module. The module can be integrated in the form of hardware, and can also be integrated in the form of software function module. If the module is integrated in the form of software function module and used as an independent product for sale or use, it can also be stored in a computer-readable storage medium.

The storage medium mentioned above can be read only memory, disk or optical disk, etc.

In the Description, the reference terms "one embodiment", "some embodiments", "example", "specific example", or "some examples", etc. are described to refer to that the specific features, structures, materials or characteristics described in combination with the embodiment or example are included in at least one embodiment or example of the present application. In the description, illustrative expressions of the above terms do not necessarily refer to the same embodiment or example. Further, the specific features, structures, materials or characteristics described may be combined in any one or more embodiments or examples in a suitable manner, in accordance with the appended claims.

Although the embodiments of the present application have been illustrated and described, it can be understood that the above embodiments are exemplary and should not be construed as limitations to the present application. Changes, modifications, replacements and variations within the scope of the present application can be made to these embodiments by those of ordinary skill in the art, in accordance with the appended claims.

## Claims

1. A railway wagon brake control system, comprising a train pipe (17) and a plurality of disc brakes (12) which are used for braking the wheels of a railway wagon, the system further comprises an ECP control host (7) and a distribution valve (6) communicated with the train pipe (17); the distribution valve is communicated with a plurality of relay valves, each relay valve corresponds to each bogie of the rail wagon, and each disc brake (12) of the same bogie is communicated with the relay valve corresponding to the bogie;
the system also comprises a control air cylinder (15) and an auxiliary reservoir (16) which are communicated with the distribution valve (6); each bogie is provided with at least one weighing valve (13), and each weighing valve (13) is respectively communicated with the auxiliary reservoir (16) and the relay valve;
**characterized in that**
the system further comprises an ECP pre-control chamber (14), the ECP pre-control chamber is communicated with the train pipe, and the ECP control host (7) controls the air pressure change in the ECP pre-control chamber (14) so as to enable pressure air in the train pipe to be exhausted;
the system further comprises a speed synchronization control host (2), wherein the speed synchronization control host is connected to a plurality of speed sensors (11), and each speed sensor measures the speed of each wheel of the railway wagon.

2. The railway wagon brake control system according to claim 1, **characterized in that**, the speed sensors (11) are installed on the axle ends of each wheel of the railway wagon.

3. The railway wagon brake control system according to claim 1, **characterized in that**, the disc brake (12) is communicated with the corresponding relay valve through an independent pipeline, and each pipeline is provided with an electromagnetic exhaust valve (4), which is respectively connected to the speed synchronization control host (2).

4. The railway wagon brake control system according to claim 3, **characterized in that**, the train pipe (17) is communicated with a pressure relay (10), which controls the circuit of each electromagnetic exhaust valve (4).

5. The railway wagon brake control system according to claim 4, **characterized by** also comprising an MUD main valve plate (1), wherein the relay valve and distribution valve (6) are installed on one side of the MUD main valve plate (1), and the ECP control host (7), ECP pre-control chamber (14), control air cylinder (15), pressure relay (10) and each electromagnetic exhaust valve (4) are installed on the other side.

6. The railway wagon brake control system according to claim 1, **characterized in that**, a block valve (5) is provided between the distribution valve (6) and the train pipe (17).

7. The railway wagon brake control system according to claim 1, **characterized by** also comprising a plurality of pressure sensors connected to the ECP control host (7), wherein each pressure sensor measures the pressure of the train pipe (17), the pressure of the control air cylinder (15), the output pressure of the distribution valve (6) and the output pressure of the relay valve.

8. The railway wagon brake control system according to claim 1, **characterized in that**, the ECP control host (7) is transmitted to an external device through an RS485 communication line, and the speed synchronization control host (2) is installed in the main control cabinet of the railway wagon.

9. A railway wagon brake control method, **characterized in that**, the method is applied in the railway wagon brake control system according to any of claims 1-8, and the method comprises:
the ECP control host (7) controls the air pressure change in the ECP pre-control chamber (14) so as to enable pressure air in the train pipe (17) to be exhausted;
after the pressure in the train pipe is reduced, the air in the auxiliary reservoir (16) is controlled to flow to each relay valve through the distribution valve (6);
each relay valve breaks down its output pressure to each disc brake (12) according to the output of each weighing valve (13); and
each disc brake performs braking action;
the method further comprises:
speed sensors (11) are configured on the axle ends of each wheel of the railway wagon, and the speed of each wheel is measured by the speed sensor and fed back to the speed synchronization control host (2);
an electromagnetic exhaust valve (4) is provided on the connecting pipeline between the relay valve and each disc brake (12); and
the speed synchronization control host controls the corresponding electromagnetic exhaust valve (4) according to the speed data of each wheel, so as to control the output pressure to each disc brake.

10. The railway wagon brake control method according to claim 9, **characterized in that**, the ECP control host (7) continuously measures the pressure of the train pipe (17), the pressure of the control air cylinder (15), the output pressure of the distribution valve (6) and the output pressure of the relay valve through the pressure sensor, and determines whether the vehicle is out of order according to the correspondence of each output pressure.

## Patentansprüche

1. Eisenbahnwaggon-Bremssteuersystem, umfassend ein Zugrohr (17) und eine Vielzahl von Scheibenbremsen (12), die zum Bremsen der Räder eines Eisenbahnwaggons verwendet werden, wobei das System ferner einen ECP-Steuerhost (7) und ein Verteilerventil (6) umfasst, das mit dem Zugrohr (17) in Verbindung steht; wobei das Verteilerventil mit einer Vielzahl von Relaisventilen in Verbindung steht, jedes Relaisventil jedem Drehgestell des Eisenbahnwaggons entspricht und jede Scheibenbremse (12) desselben Drehgestells mit dem Relaisventil, das dem Drehgestell entspricht, in Verbindung steht;
wobei das System auch einen Steuerluftzylinder (15) und einen Hilfsbehälter (16) umfasst, die mit dem Verteilerventil (6) in Verbindung stehen; jedes Drehgestell mit mindestens einem Wiegeventil (13) versehen ist, und jedes Wiegeventil (13) jeweils mit dem Hilfsbehälter (16) und dem Relaisventil in Verbindung steht;
**dadurch gekennzeichnet, dass**
das System ferner eine ECP-Vorsteuerkammer (14) umfasst, die ECP-Vorsteuerkammer mit dem Zugrohr in Verbindung steht und der ECP-Steuerhost (7) die Luftdruckänderung in der ECP-Vorsteuerkammer (14) steuert, so dass die Druckluft in dem Zugrohr abgelassen werden kann;
das System ferner einen Drehzahlsynchronisierungs-Steuerhost (2) umfasst, wobei der Drehzahlsynchronisierungs-Steuerhost mit einer Vielzahl von Drehzahlsensoren (11) verbunden ist, und jeder Drehzahlsensor die Drehzahl jedes Rades des Eisenbahnwaggons misst.

2. Eisenbahnwaggon-Bremssteuersystem nach Anspruch 1, **dadurch gekennzeichnet, dass** die Drehzahlsensoren (11) an den Achsenden jedes Rades des Eisenbahnwaggons installiert sind.

3. Eisenbahnwaggon-Bremssteuersystem nach Anspruch 1, **dadurch gekennzeichnet, dass** die Scheibenbremse (12) über eine unabhängige Rohrleitung mit dem entsprechenden Relaisventil in Verbindung steht und jede Rohrleitung mit einem elektromagnetischen Auslassventil (4) versehen ist, das jeweils mit dem Drehzahlsynchronisierungs-Steuerhost (2) verbunden ist.

4. Eisenbahnwaggon-Bremssteuersystem nach Anspruch 3, **dadurch gekennzeichnet, dass** das Zugrohr (17) mit einem Druckrelais (10) in Verbindung steht, das den Stromkreis jedes elektromagnetischen Auslassventils (4) steuert.

5. Eisenbahnwaggon-Bremssteuersystem nach Anspruch 4, **dadurch gekennzeichnet, dass** es auch eine MUD-Hauptventilplatte (1) umfasst, wobei das Relaisventil und das Verteilerventil (6) auf einer Seite der MUD-Hauptventilplatte (1) installiert sind und der ECP-Steuerhost (7), die ECP-Vorsteuerkammer (14), der Steuerluftzylinder (15), das Druckrelais (10) und jedes elektromagnetische Auslassventil (4) auf der anderen Seite installiert sind.

6. Eisenbahnwaggon-Bremssteuersystem nach Anspruch 1, **dadurch gekennzeichnet, dass** zwischen dem Verteilerventil (6) und dem Zugrohr (17) ein Sperrventil (5) vorgesehen ist.

7. Eisenbahnwaggon-Bremssteuersystem nach Anspruch 1, **dadurch gekennzeichnet, dass** es auch eine Vielzahl von Drucksensoren umfasst, die mit dem ECP-Steuerhost (7) verbunden sind, wobei jeder Drucksensor den Druck des Zugrohrs (17), den Druck des Steuerluftzylinders (15), den Ausgangsdruck des Verteilerventils (6) und den Ausgangsdruck des Relaisventils misst.

8. Eisenbahnwaggon-Bremssteuersystem nach Anspruch 1, **dadurch gekennzeichnet, dass** der ECP-Steuerhost (7) über eine RS485-Kommunikationsleitung an eine externe Vorrichtung übertragen wird und der Drehzahlsynchronisierungs-Steuerhost (2) im Hauptschaltschrank des Eisenbahnwaggons installiert ist.

9. Eisenbahnwaggon-Bremssteuerungsverfahren, **dadurch gekennzeichnet, dass** das Verfahren in dem Eisenbahnwaggon-Bremssteuerungssystem nach einem der Ansprüche 1 bis 8 angewendet wird, und das Verfahren Folgendes umfasst:
der ECP-Steuerhost (7) steuert die Luftdruckänderung in der ECP-Vorsteuerkammer (14), so dass die Druckluft in dem Zugrohr (17) abgelassen werden kann;
nachdem der Druck in dem Zugrohr reduziert wurde, wird die Luft im Hilfsbehälter (16) so gesteuert, dass sie durch das Verteilerventil (6) zu jedem Relaisventil strömt;
jedes Relaisventil teilt seinen Ausgangsdruck an jeder Scheibenbremse (12) entsprechend dem Ausgang jedes Wiegeventils (13) auf; und
jede Scheibenbremse führt einen Bremsvorgang durch;
wobei das Verfahren ferner Folgendes umfasst:
Drehzahlsensoren (11) sind an den Achsenden jedes Rades des Eisenbahnwaggons konfiguriert, und die Drehzahl jedes Rades wird vom Drehzahlsensor gemessen und an den Drehzahlsynchronisierungs-Steuerhost (2) zurückgemeldet;
ein elektromagnetisches Auslassventil (4) ist an der Verbindungsleitung zwischen dem Relaisventil und jeder Scheibenbremse (12) vorgesehen; und
der Drehzahlsynchronisierungs-Steuerhost steuert das entsprechende elektromagnetische Auslassventil (4) entsprechend den Drehzahldaten jedes Rades, um den Ausgangsdruck zu jeder Scheibenbremse zu steuern.

10. Eisenbahnwaggon-Bremssteuerungsverfahren nach Anspruch 9, **dadurch gekennzeichnet, dass** der ECP-Steuerhost (7) kontinuierlich den Druck des Zugrohrs (17), den Druck des Steuerluftzylinders (15), den Ausgangsdruck des Verteilerventils (6) und den Ausgangsdruck des Relaisventils durch den Drucksensor misst und entsprechend der Übereinstimmung jedes Ausgangsdrucks bestimmt, ob das Fahrzeug außer Betrieb ist.

## Revendications

1. Système de commande de frein de wagon de chemin de fer, comprenant une conduite de train (17) et une pluralité de freins à disque (12) qui sont utilisés pour le freinage des roues d'un wagon de chemin de fer, le système comprend en outre un hôte de commande ECP (7) et une vanne de distribution (6) en communication avec la conduite de train (17) ; la vanne de distribution est en communication avec une pluralité de vannes relais, chaque vanne relais correspond à chaque bogie du wagon de chemin de fer, et chaque frein à disque (12) du même bogie est en communication avec la vanne relais correspondant au bogie ; le système comprend également un vérin pneumatique de commande (15) et un réservoir auxiliaire (16) qui sont en communication avec la vanne de distribution (6) ; chaque bogie est muni d'au moins une vanne de pesage (13), et chaque vanne de pesage (13) est respectivement en communication avec le réservoir auxiliaire (16) et la vanne relais ;
**caractérisé en ce que**
le système comprend en outre une chambre de précommande ECP (14), la chambre de précommande ECP est en communication avec la conduite de train, et l'hôte de commande ECP (7) commande le changement de pression d'air dans la chambre de précommande ECP (14) de façon à permettre à de l'air sous pression dans la conduite de train d'être évacué ;
le système comprend en outre un hôte de commande de synchronisation de vitesse (2), dans lequel l'hôte de commande de synchronisation de vitesse est connecté à une pluralité de capteurs de vitesse (11), et chaque capteur de vitesse mesure la vitesse de chaque roue du wagon de chemin de fer.

2. Système de commande de frein de wagon de chemin de fer selon la revendication 1, **caractérisé en ce que** les capteurs de vitesse (11) sont installés sur les extrémités d'essieu de chaque roue du wagon de chemin de fer.

3. Système de commande de frein de wagon de chemin de fer selon la revendication 1, **caractérisé en ce que** le frein à disque (12) est en communication avec la vanne relais correspondante par le biais d'une canalisation indépendante, et chaque canalisation est munie d'une vanne d'évacuation électromagnétique (4), qui est respectivement connectée à l'hôte de commande de synchronisation de vitesse (2).

4. Système de commande de frein de wagon de chemin de fer selon la revendication 3, **caractérisé en ce que** la conduite de train (17) est en communication avec un relais de pression (10), qui commande le circuit de chaque vanne d'évacuation électromagnétique (4).

5. Système de commande de frein de wagon de chemin de fer selon la revendication 4, **caractérisé en ce qu'**il comprend également une plaque de vanne principale MUD (1), dans lequel la vanne relais et la vanne de distribution (6) sont installées sur un côté de la plaque de vanne principale MUD (1), et l'hôte de commande ECP (7), la chambre de précommande ECP (14), le vérin pneumatique de commande (15), le relais de pression (10) et chaque vanne d'évacuation électromagnétique (4) sont installés sur l'autre côté.

6. Système de commande de frein de wagon de chemin de fer selon la revendication 1, **caractérisé en ce qu'**une vanne de sectionnement (5) est fournie entre la vanne de distribution (6) et la conduite de train (17).

7. Système de commande de frein de wagon de chemin de fer selon la revendication 1, **caractérisé en ce qu'**il comprend également une pluralité de capteurs de pression connectés à l'hôte de commande ECP (7), dans lequel chaque capteur de pression mesure la pression de la conduite de train (17), la pression du vérin pneumatique de commande (15), la pression de sortie de la vanne de distribution (6) et la pression de sortie de la vanne relais.

8. Système de commande de frein de wagon de chemin de fer selon la revendication 1, **caractérisé en ce que** l'hôte de commande ECP (7) est transmis à un dispositif externe par le biais d'une ligne de communication RS485, et l'hôte de commande de synchronisation de vitesse (2) est installé dans l'armoire de commande principale du wagon de chemin de fer.

9. Procédé de commande de frein de wagon de chemin de fer, **caractérisé en ce que** le procédé est appliqué dans le système de commande de frein de wagon de chemin de fer selon l'une quelconque des revendications 1 à 8, et le procédé comprend :
l'hôte de commande ECP (7) commande le changement de pression d'air dans la chambre de précommande ECP (14) de façon à permettre à de l'air sous pression dans la conduite de train (17) d'être évacué ;
après que la pression dans la conduite de train est réduite, l'air dans le réservoir auxiliaire (16) est commandé afin qu'il s'écoule vers chaque vanne relais par le biais de la vanne de distribution (6) ;
chaque vanne relais diminue brutalement sa pression de sortie vers chaque frein à disque (12) selon la sortie de chaque vanne de pesage (13) ; et
chaque frein à disque réalise une action de freinage ;
le procédé comprend en outre :
des capteurs de vitesse (11) sont configurés sur les extrémités d'essieu de chaque roue du wagon de chemin de fer, et la vitesse de chaque roue est mesurée par le capteur de vitesse et renvoyée à l'hôte de commande de synchronisation de vitesse (2) ;
une vanne d'évacuation électromagnétique (4) est fournie sur la canalisation de raccordement entre la vanne relais et chaque frein à disque (12) ; et
l'hôte de commande de synchronisation de vitesse commande la vanne d'évacuation électromagnétique (4) correspondante selon les données de vitesse de chaque roue, de façon à commander la pression de sortie vers chaque frein à disque.

10. Procédé de commande de frein de wagon de chemin de fer selon la revendication 9, **caractérisé en ce que** l'hôte de commande ECP (7) mesure en continu la pression de la conduite de train (17), la pression du vérin pneumatique de commande (15), la pression de sortie de la vanne de distribution (6) et la pression de sortie de la vanne relais par le biais du capteur de pression, et détermine si le véhicule est hors service selon la correspondance de chaque pression de sortie.
